# EUROPEAN PATENT APPLICATION

(11) **EP 4 442 485 A1**
(43) Date of publication of application: **09.10.2024**
(21) Application number: 24153856.0
(22) Date of filing: 25.01.2024
(51) Int. Cl.: B60L 53/14, B60L 53/62, B60L 53/66, H02J 7/00

(54) **CHARGING CONTROL DEVICE AND CHARGING CONTROL METHOD FOR ELECTRIC VEHICLE**

(30) Priority: 08.03.2023 JP 2023035677
(71) Applicant: TOYOTA JIDOSHA KABUSHIKI KAISHA, Toyota-shi, Aichi-ken 471-8571 (JP)
(72) Inventor: MOTOHIRA, Akito, Toyota-shi, Aichi-ken 471-8571 (JP); KUBOYAMA, Yutaka, Toyota-shi, Aichi-ken 471-8571 (JP)
(74) Representative: Cabinet Beau de Loménie

(57) **Abstract**

A charging control device (100, 200) of a vehicle (102, 202) includes a power storage device (110), a communicator (133, 134, 135, 136) configured to communicate with a charger (103, 203), and a controller (13, 213) configured to control charging by the charger (103; 203). The controller (13, 213) is configured to perform control of transmitting second information as information regarding voltage at a time of charging when performing retransmission of the information regarding the voltage at the time of the charging to the charger (103, 203) through the communicator (133, 134, 135, 136), after transmitting first information as information regarding voltage at the time of charging to the charger (103, 203) through the communicator (133, 134, 135, 136). The first information is information indicating that the charging is to be performed using the first voltage. The second information is information indicating that the charging is to be performed using the second voltage.

## Description

### 1. Field of the Invention

The present disclosure relates to a charging control device and a charging control method.

### 2. Description of Related Art

Japanese Unexamined Patent Application Publication No. 2019-047677 (JP 2019-047677 A) discloses a charging system in which a vehicle is charged with electric power from a charging station.

### SUMMARY OF THE INVENTION

Here, in the charging system such as disclosed in JP 2019-047677 A, a charging sequence may not proceed smoothly due to conditions (parameters) regarding charging voltage of a charger and the vehicle. For example, the charging sequence may be stopped due to an incompatibility between a parameter for the charging voltage transmitted from the vehicle to the charger, and an actual voltage state of the vehicle.

The present disclosure provides a charging control device and a charging control method that facilitates smooth progress of a charging sequence between a charger and a vehicle.

A charging control device for a vehicle, according to a first aspect of the present disclosure, includes a power storage device configured to be charged with electric power based on a first voltage, or electric power based on a second voltage that is different from the first voltage, from a charger, a communicator configured to communicate with the charger, and a controller configured to control charging by the charger. The controller is configured to, perform control of transmitting second information as information regarding voltage at a time of charging when performing retransmission of the information regarding the voltage at the time of the charging to the charger through the communicator, after transmitting first information as the information regarding voltage at the time of charging to the charger through the communicator, the first information being information indicating that the charging is to be performed using the first voltage, and the second information being information that indicates that the charging is to be performed using the second voltage.

As described above, the charging control device according to the first aspect of the present disclosure transmits, after transmitting the first information indicating that the charging is to be performed using the first voltage to the charger, the second information indicating that the charging is to be performed using the second voltage, when performing retransmission of the information regarding the voltage at the time of the charging, to the charger. Accordingly, when the charging sequence does not proceed normally with the first voltage, the charging sequence can be restarted with the second voltage that is different from the first voltage. As a result, it is possible to easily suppress continuation of a state in which the charging sequence does not proceed normally. According to the above configuration, the charging sequence between the charger and the vehicle can proceed smoothly.

In the charging control device according to the first aspect of the present disclosure, the controller may be configured to perform the control of transmitting the second information to the charger through the communicator, when a signal indicating an incompatibility between the first voltage and voltage information of the charger is received from the charger without receiving the voltage information from the charger after transmitting the first information to the charger.
According to the above configuration, the charging sequence based on the second voltage can be easily started based on the signal indicating the incompatibility.

In the charging control device according to the first aspect of the present disclosure, the controller may be configured to perform the control of transmitting the second information to the charger through the communicator, when a charging sequence is stopped prior to the charging starting, after the first information is transmitted to the charger through the communicator, and also the charging sequence is restarted at the same charger as the charger at which the charging sequence is stopped. According to the above configuration, the second information can be suppressed from being initially transmitted to a charger that is different from the charger regarding which the charging sequence was stopped.

In the charging control device according to the first aspect of the present disclosure, the controller may be configured to judge that the charging sequence is restarted at the same charger, when judging that the vehicle is not moved within a period from stopping of the charging sequence until the charging sequence is restarted. According to the above configuration, judgement can be easily made that the charging sequence has been restarted at the same charger, based on amount of movement of the vehicle.

In the charging control device according to the first aspect of the present disclosure, the controller may be configured to judge that the charging sequence is restarted at the same charger, when the charging sequence is restarted based on the charger requesting restarting of the charging sequence after the charging sequence stopping. According to the above configuration, judgement can be easily made that the charging sequence has been restarted at the same charger, based on the request from the charger.

In the charging control device according to the first aspect of the present disclosure, the vehicle may include a connector configured to receive connection of a charging plug of the charger. The controller may be configured to perform the control of transmitting the second information to the charger through the communicator, when the charging sequence is stopped and a signal indicating an incompatibility between the first voltage and voltage of the connector that is actually measured, is transmitted from the charger to the communicator. According to the above configuration, incompatibility can be determined based on the actually measured voltage at the connector. As a result, incompatibility can be determined with high accuracy. Note that "voltage at the connector" has a broad meaning, including voltage at a terminal provided in the connector.

In the charging control device according to the first aspect of the present disclosure, the controller may be configured to perform the control of transmitting, to a communication terminal of a user of the vehicle, a notification prompting to retry the charging, when the signal indicating the incompatibility is transmitted from the charger to the communicator,. According to the above configuration, the user can easily perform an operation to restart the charging sequence.

In the charging control device according to the first aspect of the present disclosure, the controller may be configured to execute first charging control of boosting voltage supplied from the charger and charging the power storage device, and second charging control of charging the power storage device without boosting the voltage supplied from the charger. According to the above configuration, the voltage itself from the charger, and voltage obtained by boosting the voltage from the charger, can be switched in the follow-up charging sequence.

A charging control method for a vehicle, according to a second aspect of the present disclosure, is executed by a controller. The vehicle includes a power storage device configured to be charged with electric power based on a first voltage, or electric power based on a second voltage that is different from the first voltage, from a charger. The charging control method includes transmitting, to the charger, first information indicating that the charging is to be performed using the first voltage, as information regarding voltage at a time of charging, and transmitting second information indicating that the charging is to be performed using the second voltage as the information regarding voltage at the time of charging, when, after transmitting the first information to the charger, performing retransmission of the information regarding the voltage at the time of the charging to the charger.

As described above, in the charging control method according to the second aspect of the present disclosure, after the first information indicating that the charging is to be performed using the first voltage being transmitted to the charger, the second information indicating that the charging is to be performed using the second voltage is transmitted to the charger, when performing retransmission of the information regarding the voltage at the time of the charging, from the vehicle to the charger. According to the above configuration, a charging control method can be provided that enables the charging sequence between the charger and the vehicle to proceed smoothly.

According to the present disclosure, the charging sequence between the charger and the vehicle can proceed smoothly.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a configuration of a vehicle and a charger according to a first embodiment;
FIG. 2 is a flowchart showing a charging sequence between the vehicle and the charger;
FIG. 3 is a sequence diagram showing a charging handshake stage and a charging parameter distribution stage according to the first embodiment;
FIG. 4 is a diagram showing details of step S401 in FIG. 3;
FIG. 5 is a diagram illustrating a configuration of a vehicle and a charger according to a second embodiment;
FIG. 6 is a sequence diagram showing a charging parameter distribution stage according to the second embodiment; and
FIG. 7 is a sequence diagram showing a charging parameter distribution stage according to a modification of the second embodiment.

### DETAILED DESCRIPTION OF EMBODIMENTS

Embodiments of the present disclosure will be described in detail below with reference to the drawings. The same or corresponding parts are denoted by the same signs throughout the drawings, and description thereof will not be repeated.

### First Embodiment

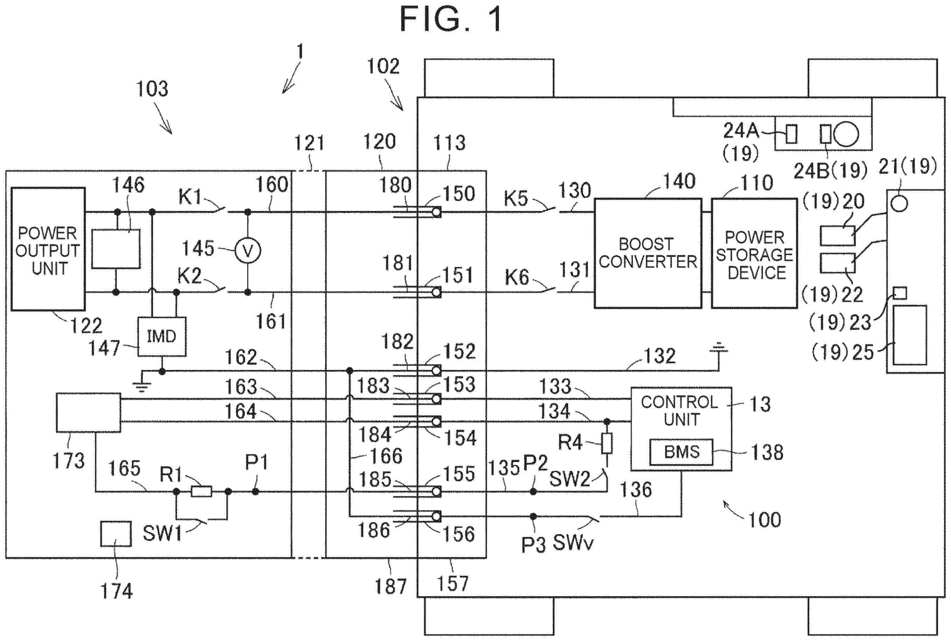

A charging system and a vehicle according to a first embodiment will be described with reference to FIGS. 1 to 4. Configurations illustrated in FIGS. 1 to 4 that are the same or substantially the same are denoted by the same signs, and redundant description thereof will be omitted. Note that in the specification, the drawings, and so forth, "S" means "Step".

FIG. 1 is a schematic diagram schematically illustrating a charging system 1 according to the first embodiment. The charging system 1 includes a vehicle 102 and a charger 103.

The vehicle 102 includes a power storage device 110, a charging inlet 113, a boost converter 140, and a controller 13.

The charging inlet 113 includes a DC+ terminal 150, a DC- terminal 151, a PE terminal 152, an S+ terminal 153, an S- terminal 154, a CC1 terminal 155, a CC2 terminal 156, and a housing 157. The terminals 150 to 156 are accommodated in the housing 157, and each terminal is insulated. Note that the charging inlet 113 is an example of "connector" in the present disclosure.

The vehicle 102 includes a DC+ wiring 130, a DC- wiring 131, a PE line 132, an S+ signal line 133, an S- signal line 134, a CC1 communication line 135, a CC2 communication line 136, contactors K5 and K6, and switches SW2 and SWv. The S+ signal line 133, the S- signal line 134, the CC1 communication line 135, and the CC2 communication line 136 are an example of "communicator" in the present disclosure. Also, a charging control device 100 is made up of the S+ signal line 133, the S- signal line 134, the CC1 communication line 135, the CC2 communication line 136, and the controller 13.

The DC+ wiring 130 and the DC- wiring 131 are connected to the boost converter 140. The DC+ wiring 130 is connected to the DC+ terminal 150, and the DC-wiring 131 is connected to the DC- terminal 151. The PE line 132 is a ground line, and is connected to the PE terminal 152. Also, the boost converter 140 is connected to the power storage device 110. The boost converter 140 is capable of boosting the voltage input from the DC+ wiring 130 and the DC- wiring 131 and performing output thereof to the power storage device 110.

The S+ signal line 133, the S- signal line 134, the CC1 communication line 135, and the CC2 communication line 136 are connected to the controller 13. The S+ signal line 133 is connected to the S+ terminal 153. The S- signal line 134 is connected to the S-terminal 154. The CC1 communication line 135 is connected to the CC1 terminal 155. The CC2 communication line 136 is connected to the CC2 terminal 156.

The contactor K5 is provided on the DC+ wiring 130. The contactor K6 is provided on the DC- wiring 131. A resistor R4 is connected to the CC1 communication line 135. The switch SW2 is connected to the CC1 communication line 135 in series with the resistor R4. The switch SWv is provided on the CC2 communication line 136. The controller 13 controls on/off switching of the contactors K5 and K6, and the switches SW2 and SWv.

The controller 13 is provided with a battery management system (BMS) 138. The vehicle 102 includes a plurality of input units 19. The input units 19 include, for example, an accelerator pedal 20, an ignition switch 21, a brake pedal 22, a hazard warning signal switch 23, a door lock button 24A, a door unlock button 24B, and a display unit 25.

The charger 103 includes a power output unit 122, a DC+ wiring 160, a DC- wiring 161, a PE line 162, an S+ signal line 163, an S- signal line 164, a CC1 communication line 165, a CC2 communication line 166, a contactor K1, a contactor K2, a switch SW1, a voltage measurement device 145, a bleeder circuit 146, an insulation monitoring device (IMD) 147, a charger controller 173, and a stop button 174.

A plug (charging connector) 120 includes a DC+ terminal 180, a DC-terminal 181, a PE terminal 182, an S+ terminal 183, an S- terminal 184, a CC1 terminal 185, a CC2 terminal 186, and a housing 187. The terminals are accommodated within the housing 187. Note that the plug 120 is an example of "charging plug" in the present disclosure.

The DC+ wiring 160 and the DC- wiring 161 are connected to the power output unit 122. The DC+ wiring 160 is connected to the DC+ terminal 180. The DC- wiring 161 is connected to the DC- terminal 181. The PE line 162 is a ground line. The PE line 162 is connected to the PE terminal 182.

The S+ signal line 163, the S- signal line 164, and the CC1 communication line 165 are connected to the charger controller 173. The S+ signal line 163 is connected to the S+ terminal 183. The S- signal line 164 is connected to the S- terminal 184.

The CC1 communication line 165 is connected to the CC1 terminal 185. One end of the CC2 communication line 166 is connected to the PE line 162. The other end of the CC2 communication line 166 is connected to the CC2 terminal 186.

The contactor K1 is provided on the DC+ wiring 160. The contactor K2 is provided on the DC- wiring 161. The CC1 communication line 165 is provided with a resistor R1. The switch SW1 is connected to the CC1 communication line 165 in parallel with the resistor R1.

The voltage measurement device 145 is provided so as to connect the DC+ wiring 160 and the DC- wiring 161. Specifically, the voltage measurement device 145 is connected between the DC+ terminal 180 and the contactor K1 on the DC+ wiring 160, and between the DC- terminal 181 and the contactor K2 on the DC- wiring 161.

The IMD 147 is provided between the power output unit 122 and the contactors K1 and K2 so as to connect the DC+ wiring 160 and the DC- wiring 161. Further, the IMD 147 is also connected to the PE line 162. The bleeder circuit 146 is provided between the power output unit 122 and the contactors K1 and K2 so as to connect the DC+ wiring 160 and the DC- wiring 161.

In a state in which the plug 120 is connected to the charging inlet 113, the DC+ terminal 150 and the DC+ terminal 180 are connected, and the DC- terminal 151 and the DC- terminal 181 are connected. Also, the PE terminal 152 is connected to the PE terminal 182, and the S+ terminal 153 is connected to the S+ terminal 183. Further, the S-terminal 154 is connected to the S- terminal 184, and the CC1 terminal 155 is connected to the CC1 terminal 185. Also, the CC2 terminal 156 is connected to the CC2 terminal 186.

The controller 13 periodically monitors a detection point P2 on the CC1 communication line 135 and a detection point P3 on the CC2 communication line 136. The charger controller 173 periodically monitors a detection point P1 on the CC1 communication line 165.

The charger controller 173 performs on/off switching control of the power output unit 122 and the switch SW1, and on/off switching control of the contactors K1 and K2. The stop button 174 is provided on the charger 103, and is a button that a user presses to stop charging, for example. When the stop button 174 is pressed, the charger controller 173 stops the charging.

The controller 13 performs on/off switching control of the switch SW2 and the switch SWv, on/off switching control of the contactors K5 and K6, and boost control of the boost converter 140.

When the plug 120 is connected to the charging inlet 113 as described above, various types of control for implementing charging are executed.

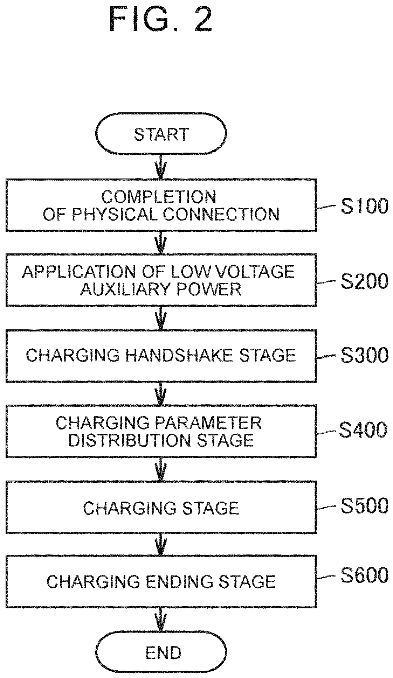

FIG. 2 is a flowchart showing an overview of a charging flow. In FIG. 2, the charging flow includes completion of physical connection (S100), application of low voltage auxiliary power (S200), a charging handshake stage (S300), a charging parameter distribution stage (S400), a charging stage (S500), and a charging ending stage (S600).

In the step of completion of physical connection (S100), the physical connection between the charger 103 and the vehicle 102 is completed, and electricity is applied between the charger 103 and the vehicle 102. Specifically, the physical connection is completed by the plug 120 being connected to the charging inlet 113, and thereafter electronic locking being completed.

In the step of application of low voltage auxiliary power (S200), a low voltage auxiliary power feed circuit in the charger 103 is turned on.

In the charging handshake stage (S300), the vehicle 102 and the charger 103 exchange a vehicle handshake message of the vehicle 102 and a charger handshake message of the charger 103, and exchange a vehicle recognition message of the vehicle 102 and a charger recognition message of the charger 103.

In the charging parameter distribution stage (S400), after the charging handshake stage being completed, the charger 103 and the vehicle 102 transmit and receive various types of charging parameter messages to determine whether both are capable of charging.

In the charging stage (S500), the vehicle 102 transmits a battery charging demand to the charger 103 in real time. The charger 103 adjusts charging voltage and charging current, based on the battery charging demand, and ensures that the charging process is performed normally. During the charging process, the charger 103 and the vehicle 102 transmit their respective charging states. Also, the vehicle 102 can transmit information such as specific state, voltage, temperature, and so forth, of the power storage device 110, to the charger 103.

In the charging ending stage (S600), the vehicle 102 transmits, to the charger 103, charging statistical data including the central state of charge (SOC) of the total charging process, and the lowest voltage and the highest voltage of the battery. After receiving the charging statistical data of the vehicle 102, the charger 103 transmits information such as an amount of electricity output during the total charging process, cumulative charging time, and so forth, to the vehicle 102. Finally, the charger 103 stops output of the low voltage auxiliary power source.

### Sequence of Charging Handshake Stage and Charging Parameter Distribution Stage

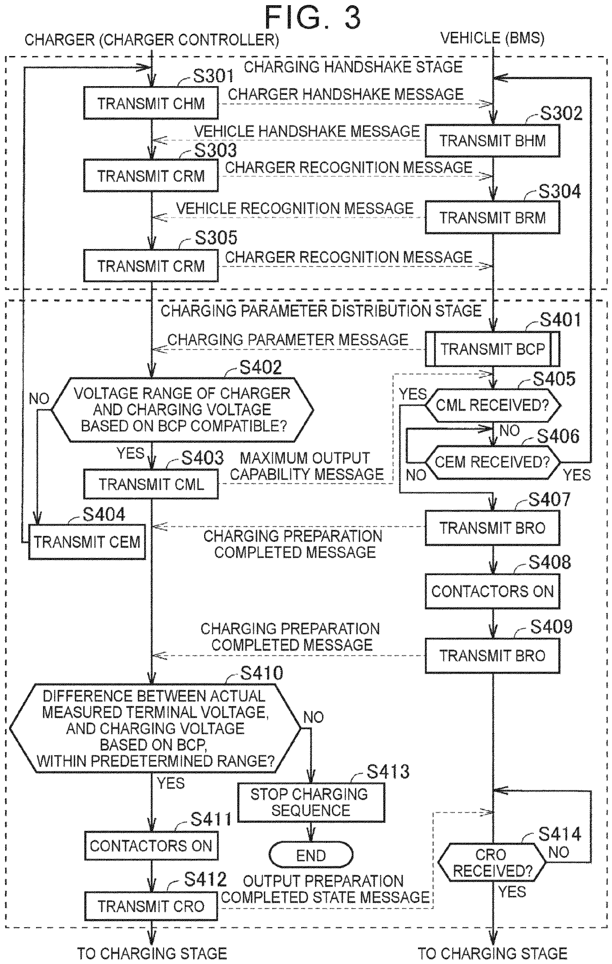

Next, sequence control between the charger 103 (charger controller 173) and the vehicle 102 (BMS 138) in the charging handshake stage (S300) and the charging parameter distribution stage (S400) will be described with reference to FIG. 3

The charging handshake stage (S300) includes steps S301 to S305. In step S301, the charger 103 transmits a charging handshake message CHM to the vehicle 102. The charging handshake message CHM includes information regarding a version number of a communication protocol of the charger 103.

In step S302, the vehicle 102 transmits a vehicle handshake message BHM to the charger 103. The vehicle handshake message BHM includes information regarding total allowable voltage for vehicle-side insulation monitoring.

In step S303, the charger 103 transmits a charger recognition message CRM to the vehicle 102. The charger recognition message CRM includes recognition information of the charger 103.

In step S304, the vehicle 102 transmits a vehicle recognition message BRM to the charger 103. The vehicle recognition message BRM includes recognition information of the vehicle 102 and recognition information of the BMS 138. The recognition information of the vehicle 102 includes, for example, version information of a vehicle communication protocol and a vehicle identifier. The recognition information of the BMS 138 includes information regarding battery type, and information regarding the rated capacity and total rated voltage of the power storage system of the vehicle 102.

In step S305, the charger 103 transmits the charger recognition message CRM to the vehicle 102 again, in response to receiving the vehicle recognition message BRM in step S304.

After the vehicle 102 receiving the charger recognition message CRM in step S305, the processing advances to the charging parameter distribution stage (S400). The charging parameter distribution stage (S400) includes steps S401 to S414.

In step S401, the vehicle 102 transmits a charging parameter message BCP to the charger 103. The charging parameter message BCP includes a charging voltage upper limit value (maximum allowable total charging voltage) of the power storage device 110, maximum allowable charging current value thereof, maximum allowable temperature thereof, present voltage of the power storage device 110 (present battery voltage of the completed-vehicle power battery), information indicating the parameter for the charging voltage, and so forth. Details of step S401 will be described later.

Here, the power storage device 110 is capable of being charged with electric power based on 400 V (hereinafter referred to as 400 V charging). Also, the power storage device 110 is capable of being charged with electric power based on 800 V (hereinafter referred to as 800 V charging). The vehicle 102 (BMS 138) transmits information regarding whether to perform 400 V charging or 800 V charging to the charger 103, as the parameter for the charging voltage.

For example, when the voltage of the power storage device 110 is 800 V and boosting by the boost converter 140 is on, the vehicle 102 notifies the charger 103 that 400 V charging will be performed. Also, when the voltage of the power storage device 110 is 800 V and boosting by the boost converter 140 is off, the vehicle 102 notifies the charger 103 that 800 V charging will be performed. Note that as a method for keeping the boost converter 140 from boosting the voltage, a circuit that bypasses the boost converter 140 may be formed, besides turning off the boost converter 140.

In step S402, the charger 103 determines whether the voltage range of the charger 103 and the parameter for the charging voltage based on the charging parameter message BCP are compatible. When compatible (Yes in S402), the processing advances to step S403. When not compatible (No in S402), the processing advances to step S404. Specifically, when the voltage range of the charger 103 is approximately 400 V, and also the parameter for the charging voltage is 800 V (execution of 800 V charging notified by BCP), determination is made that these are not compatible.

In step S403, the charger 103 transmits a maximum output capability message CML to the vehicle 102. The maximum output capability message CML includes information indicating minimum output voltage value, maximum export voltage value, maximum output current value (maximum export current value), and minimum output current value (minimum export current value).

In step S404, the charger 103 transmits an error message CEM to the vehicle 102. The error message CEM may include information indicating that an incompatibility has occurred in step S402.

In step S405, the vehicle 102 determines whether the maximum output capability message CML has been received. When the maximum output capability message CML has been received (Yes in S405), the processing advances to step S407. When the maximum output capability message CML has not been received (No in S405), the processing advances to step S406.

In step S406, the vehicle 102 determines whether the error message CEM has been received. When the error message CEM has been received (Yes in S406), the processing returns to step S302. When no error message CEM has been received (No in S406), the processing of step S406 is repeated. Note that the processing in step S406 may be performed just with regard to the error message CEM based on the determination in step S402. That is to say, the processing of step S406 does not need to be performed for an error message CEM based on a determination other than that of step S402.

In step S407, the vehicle 102 transmits a charging preparation completed message BRO to the charger 103. The charging preparation completed message BRO is a message indicating that charging standby of the vehicle 102 (BMS 138) has been completed.

In step S408, the vehicle 102 places the contactors K5 and K6 in a closed state (on), in response to entering the charging standby state.

In step S409, the vehicle 102 retransmits the charging preparation completed message BRO to the charger 103.

In step S410, the charger 103 determines whether difference between the actual terminal voltage (voltage between the DC+ terminal 150 and the DC- terminal 151) measured by the voltage measurement device 145, and the parameter for the charging voltage based on the charging parameter message BCP, is within a predetermined range (within ±5%). Specifically, determination is made regarding whether the difference between the terminal voltage and the charging voltage is within ±5% of the charging voltage. When the difference is within the predetermined range (Yes in S410), the processing advances to step S411. When the difference is not within the predetermined range (No in S410), the processing advances to step S413.

In step S411, the charger 103 places the contactors K1 and K2 in a closed state (on). Thus, a direct current power feed circuit between the charger 103 and the vehicle 102 is in a conducting state.

In step S412, the charger 103 transmits an output preparation completed state message CRO to the vehicle 102. Thereafter, the processing advances to the charging stage (S500).

In step S413, the charger 103 stops the charging sequence with the vehicle 102. Thereafter, the processing ends.

In step S414, the vehicle 102 determines whether the output preparation completed state message CRO has been received. When the output preparation completed state message CRO has been received (Yes in S414), the processing advances to the charging stage (S500). When no output preparation completed state message CRO has been received (No in S414), the processing of step S414 is repeated.

### Details of S401

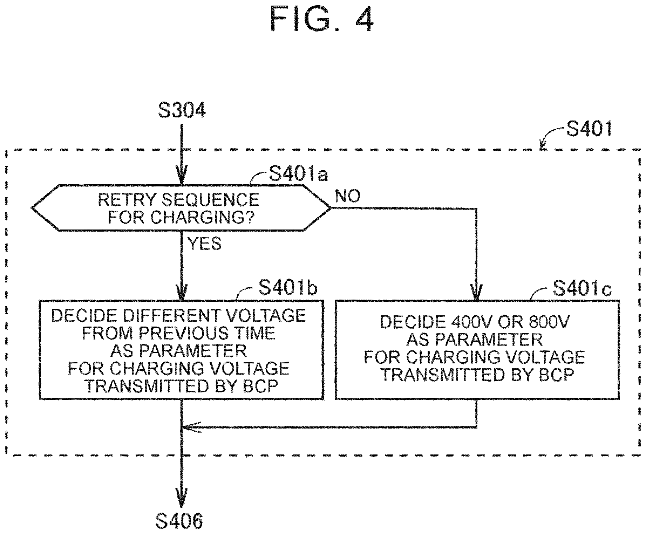

Next, detailed processing of step S401 will be described with reference to FIG. 4. Step S401 includes steps S401a to 401c.

Here, in the charging system such as disclosed in JP 2019-047677 A, there are cases in which the charging sequence does not proceed smoothly, due to conditions (parameter) regarding charging voltage of the charger and the vehicle. For example, there are cases in which the charging sequence is stopped due to an incompatibility between parameters for the charging voltage transmitted from the vehicle to the charger, and an actual voltage (terminal voltage) state of the vehicle.

Accordingly, in the first embodiment, in a case in which, after transmitting information indicating that charging is to be performed using a first voltage (e.g., performing 800 V charging) to the charger 103, information relating to the voltage at the time of charging is retransmitted to the charger 103, the vehicle 102 performs control of transmitting information indicating that charging is to be performed using a second voltage that is different from the first voltage (e.g., 400 V charging is to be performed).

This will be described in detail. In step S401a, the vehicle 102 (BMS 138) determines whether this sequence is a retry sequence for charging. Specifically, the vehicle 102 determines in step S406 whether the sequence is a sequence after the processing returning to S302 (when YES in S406). When the sequence is a retry sequence (Yes in S401a), the processing advances to step S401b. When the sequence is not a retry sequence (No in S401a), the processing advances to step S401c.

In step S401b, the vehicle 102 decides, as the parameter for the charging voltage, a voltage that is different from the parameter for the charging voltage based on the charging parameter message BCP transmitted to the charger 103 in step S401 the first time. Specifically, when the parameter for the charging voltage is 800 V in step S401 the first time, the parameter for the charging voltage is decided to be 400 V in step S401b. Also, when the parameter for the charging voltage is 400 V in step S401 the first time, the parameter for the charging voltage is decided to be 800 V in step S401b.

In step S401c, the vehicle 102 decides which of 400 V and 800 V to set the parameter for the charging voltage based on the charging parameter message BCP to. Note that the selection in this case may be decided randomly, or which to select may be set in advance.

As described above, according to the first embodiment, in a case in which, after transmitting information indicating that charging is to be performed using the first voltage (e.g., 800 V) to the charger 103, information relating to the voltage at the time of charging is retransmitted to the charger 103, the vehicle 102 performs control of transmitting information indicating that charging is to be performed using the second voltage that is different from the first voltage (e.g., 400 V). Accordingly, in the retry sequence for charging, a voltage different from the voltage at which the incompatibility occurred in the charging sequence the first time is decided upon as the parameter for the charging voltage. As a result, incompatibility can be suppressed from occurring again in the charging sequence. This enables the charging sequence to proceed smoothly.

Also, in the first embodiment, the retry sequence is entered prior to the contactors K1, K2, K5, and K6 going to the closed state (on state), and accordingly the charging sequence can be suppressed from being stopped due to the difference between the measured actual terminal voltage and the charging voltage based on the charging parameter message BCP exceeding a predetermined range.

### Second Embodiment

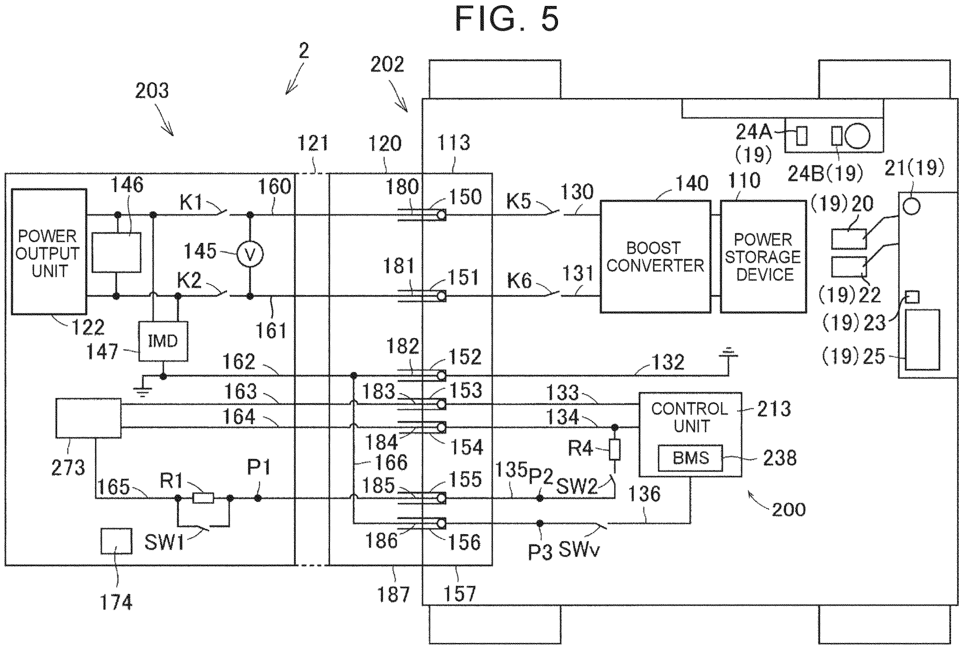

FIG. 5 is a schematic diagram schematically illustrating a charging system 2 according to a second embodiment. The charging system 2 includes a vehicle 202 and a charger 203.

The vehicle 202 differs from the vehicle 102 in the first embodiment with respect to the point of including a controller 213 instead of the controller 13. The controller 213 includes a BMS 238. Also, a charging control device 200 is made up of the S+ signal line 133, the S- signal line 134, the CC1 communication line 135, the CC2 communication line 136, and the controller 213.

The charger 203 differs from the charger 103 in the first embodiment with respect to the point of including a charger controller 273 instead of the charger controller 173.

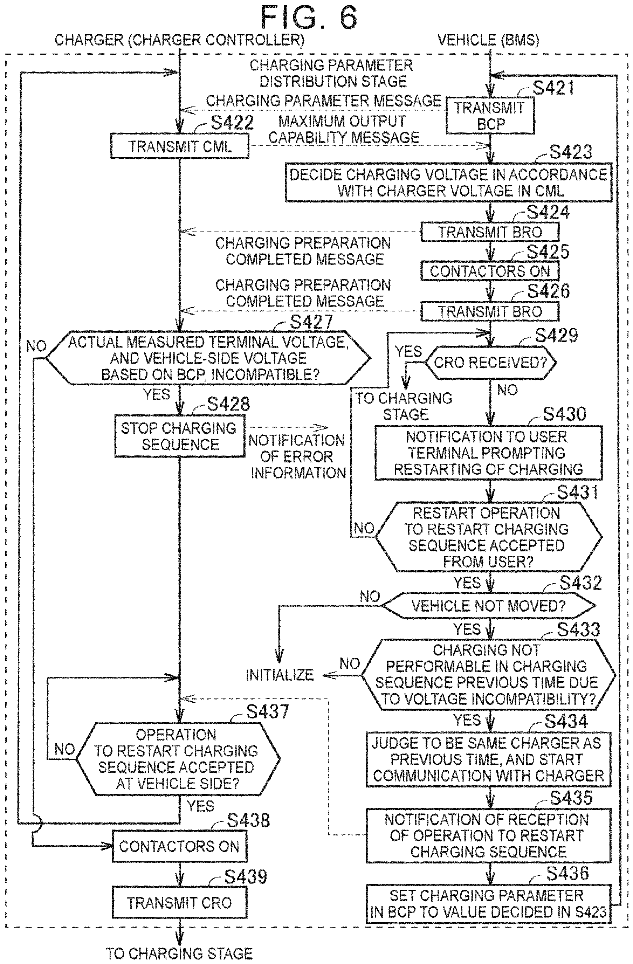

FIG. 6 shows sequence control between the vehicle 202 (BMS 238) and the charger 203 (charger controller 273) in the charging parameter distribution stage in the second embodiment. Descriptions of processing similar to that in the first embodiment may be simplified.

In step S421, the vehicle 202 transmits a charging parameter message BCP to the charger 203.

In step S422, the charger 203 transmits a maximum output capability message CML to the vehicle 202.

In step S423, the vehicle 202 decides the charging voltage in accordance with the voltage range of the charger 203 included in the maximum output capability message CML in step S422. For example, when the voltage range of the charger 203 is approximately 400 V, the vehicle 202 decides to perform 400 V charging. The vehicle 202 may place the boost converter 140 in an off state when performing 400 V charging.

The processing in each of steps S424 to S426 is respectively similar to that in steps S407 to S409 in the first embodiment. After step S426, the processing advances to step S429.

In step S427, the charger 203 determines whether the actual terminal voltage (voltage between the DC+ terminal 150 and the DC- terminal 151) measured by the voltage measurement device 145, and the parameter for the charging voltage based on the charging parameter message BCP, are incompatible. When incompatible (Yes in S427), the processing advances to step S428. When not incompatible (No in S427), the processing advances to step S438. For example, when the difference between the actual terminal voltage and the parameter for the charging voltage is not within ±5% of the parameter for the charging voltage, determination of incompatibility may be made.

In step S428, the charger 203 stops the charging sequence with the vehicle 202. At this time, the charger 203 may transmit information indicating that incompatibility has been determined in step S427 (error information) to the vehicle 202. Thereafter, the processing advances to step S437.

In step S429, the vehicle 202 determines whether the output preparation completed state message CRO has been received. When the output preparation completed state message CRO has been received (Yes in S429), the processing advances to the charging stage. When no output preparation completed state message CRO has been received (No in S429), the processing advances to step S430.

In step S430, the vehicle 202 performs control to transmit a notification prompting the user to restart charging (restart the charging sequence) to a communication terminal (e.g., a smartphone) of the user. The above notification is an example of "notification for prompting to retry charging" in the present disclosure.

In step S431, the vehicle 202 determines whether a restart operation to restart the charging sequence has been accepted from the user. When a restart operation has been accepted (Yes in S431), the processing advances to step S432. When no restart operation has been accepted (No in S431), the processing returns to step S429.

In step S432, the vehicle 202 (BMS 238) determines whether the vehicle 202 has not moved prior to the charging sequence being restarted. When determining that the vehicle 202 has not moved (Yes in S432), the processing advances to step S433. When determining that the vehicle 202 has moved (No in S432), all information such as charging parameters and so forth is initialized.

For example, the vehicle 202 determines whether the vehicle 202 has moved based on the number of rotations of tires of the vehicle 202. Note that the vehicle 202 may determine whether the vehicle 202 has moved based on a change in information from a Global Positioning System (GPS) receiver installed in the vehicle 202.

In step S433, the vehicle 202 determines whether charging could not be performed in the previous charging sequence due to voltage incompatibility in step S427. The vehicle 202 may determine the cause as to why charging could not be performed in the previous charging sequence based on error information transmitted from the charger 203 in step S428. When charging could not be performed due to voltage incompatibility (Yes in S433), the processing advances to step S434. When the cause as to why charging could not be performed is not due to voltage incompatibility (No in S433), all information, such as the charging parameters and so forth, is initialized.

In step S434, the vehicle 202 judges that the charger 203 with which the charging sequence has been restarted is the same as the charger 203 in the previous charging sequence. The vehicle 202 then starts communicating with the charger 203 that has been judged to be the same.

In step S435, the vehicle 202 notifies the charger 203 that a user operation to restart the charging sequence has been accepted. Then, in step S436, the vehicle 202 sets the parameter for the charging voltage corresponding to the charging parameter message BCP to the value of the charging voltage decided in step S423. Thereafter, the processing returns to step S421.

In step S437, the charger 203 determines whether a user operation to restart the charging sequence has been accepted at the vehicle 202. When determination is made that a restart operation has been accepted by receiving the notification in step S435 (Yes in S437), the processing returns to step S422. When determination is made that no restart operation has been accepted (No in S437), the processing of step S437 is repeated.

The processing in each of steps S438 and S439 is respectively similar to that in steps S411 and S412 in the first embodiment.

Other configurations are the same as those of the first embodiment as well, and accordingly redundant description will not be made.

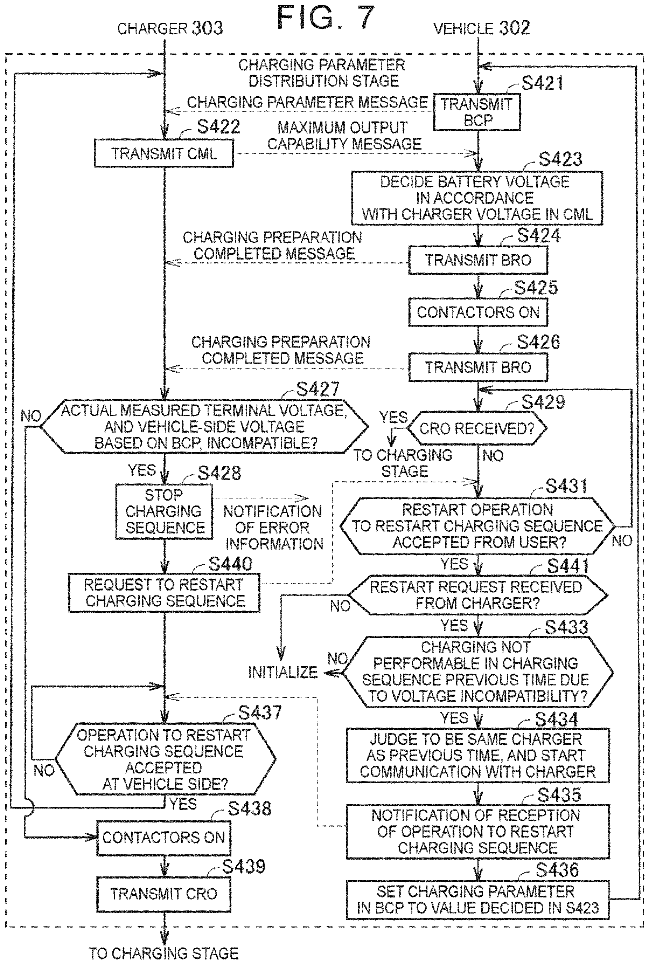

In the second embodiment, an example is shown in which judgement is made that the charging sequence has been restarted at the same charger 203 as the previous charging sequence when determination is made that the vehicle 202 has not moved, but the present disclosure is not limited to this. As shown in FIG. 7, a vehicle 302 may judge that the charging sequence has been restarted at a charger 303 that is the same as in the previous charging sequence when the charging sequence is restarted based on a request from the charger 303 to restart the charging sequence.

In FIG. 7, the charger 303 transmits a request to the vehicle 302 to restart the charging sequence in step S440, after step S428. When Yes in step S431, the processing advances to step S441. In step S441, the vehicle 302 determines whether a request to restart the charging sequence has been received from the charger 303. When a restart request has been received from the charger 303 (Yes in S441), the processing advances to step S433. When no restart request has been received from the charger 303 (No in S441), all information, such as charging parameters and so forth, is initialized.

Note that in FIG. 7, processing that is the same as in the second embodiment is denoted by the same signs, and redundant description thereof will not be made.

In the first and second embodiments described above, an example is shown in which the charging voltage from the charger is changed between 400 V and 800 V using a boost converter, but the present disclosure is not limited to this. For example, the voltage may be changed using a neutral point of a drive motor. Also, the voltage may be changed by switching between serial connection and parallel connection of battery cells in the power storage device. In these cases, the boost converter 140 does not have to be provided in the vehicle.

The embodiments disclosed herein should be construed as exemplary in all respects and not restrictive. The scope of the present disclosure is set forth in the claims rather than in the above description of the embodiments, and is intended to include all modifications within the meaning and scope equivalent to those of the claims.

## Claims

1. A charging control device (100, 200) of a vehicle (102, 202), the charging control device (100, 200) comprising:
a power storage device (110) configured to be charged with electric power based on a first voltage, or electric power based on a second voltage that is different from the first voltage, from a charger (103, 203);
a communicator (133, 134, 135, 136) configured to communicate with the charger (103, 203); and
a controller (13, 213) configured to
control charging by the charger (103, 203), and
perform control of transmitting second information as information regarding voltage at a time of charging when performing retransmission of the information regarding the voltage at the time of the charging to the charger (103, 203) through the communicator (133, 134, 135, 136) after transmitting first information as the information regarding voltage at the time of charging to the charger (103, 203) through the communicator (133, 134, 135, 136), the first information being information indicating that the charging is to be performed using the first voltage, and the second information being information that indicates that the charging is to be performed using the second voltage.

2. The charging control device (100, 200) according to claim 1, wherein the controller (13, 213) is configured to perform the control of transmitting the second information to the charger (103, 203) through the communicator (133, 134, 135, 136), when a signal indicating an incompatibility between the first voltage and voltage information of the charger (103, 203) is received from the charger (103, 203) without receiving the voltage information from the charger (103, 203) after transmitting the first information to the charger (103, 203).

3. The charging control device (100, 200) according to claim 1, wherein the controller (13, 213) is configured to perform the control of transmitting the second information to the charger (103, 203) through the communicator (133, 134, 135, 136), when a charging sequence is stopped prior to the charging starting, after the first information is transmitted to the charger (103, 203) through the communicator (133, 134, 135, 136), and also the charging sequence is restarted at the same charger (103, 203) as the charger (103, 203) at which the charging sequence is stopped.

4. The charging control device (100, 200) according to claim 3, wherein the controller (13, 213) is configured to judge that the charging sequence is restarted at the same charger (103, 203), when judging that the vehicle (102, 202) is not moved within a period from stopping of the charging sequence until the charging sequence is restarted.

5. The charging control device (100, 200) according to claim 3, wherein the controller (13, 213) is configured to judge that the charging sequence is restarted at the same charger (103, 203), when the charging sequence is restarted based on the charger (103, 203) requesting restarting of the charging sequence after the charging sequence is stopped.

6. The charging control device (100, 200) according to any one of claims 3 to 5, wherein:
the vehicle (102, 202) includes a connector (113) configured to receive connection of a charging plug (120) of the charger (103, 203); and
the controller (13, 213) is configured to perform the control of transmitting the second information to the charger (103, 203) through the communicator (133, 134, 135, 136), when charging sequence is stopped and a signal indicating an incompatibility between the first voltage and voltage of the connector (113) that is actually measured is transmitted from the charger (103, 203) to the communicator (133, 134, 135, 136).

7. The charging control device (100, 200) according to claim 6, wherein the controller (13, 213) is configured to perform the control of transmitting, to a communication terminal of a user of the vehicle (102, 202), a notification prompting to retry the charging, when the signal indicating the incompatibility is transmitted from the charger (103, 203) to the communicator (133, 134, 135, 136).

8. The charging control device (100, 200) according to any one of claims 1 to 5, wherein the controller (13, 213) is configured to execute first charging control of boosting voltage supplied from the charger (103, 203) and charging the power storage device (110), and second charging control of charging the power storage device (110) without boosting the voltage supplied from the charger (103, 203).

9. A charging control method, for a vehicle (102, 202) that includes a power storage device (110) configured to be charged with electric power based on a first voltage, or electric power based on a second voltage that is different from the first voltage, from a charger (103, 203), and executed by a controller (13, 213), the charging control method comprising:
transmitting, to the charger (103, 203), first information indicating that the charging is to be performed using the first voltage, as information regarding voltage at a time of charging; and
transmitting second information indicating that the charging is performed using the second voltage as the information regarding voltage at the time of charging, when, after transmitting the first information to the charger (103, 203), performing retransmission of the information regarding the voltage at the time of the charging to the charger (103, 203).
